# EUROPÄISCHE PATENTSCHRIFT

(11) **EP 0 492 187 B1**
(45) Veröffentlichungstag und Bekanntmachung des Hinweises auf die Patenterteilung: **22.02.1995**
(21) Anmeldenummer: 91120756.1
(22) Anmeldetag: 03.12.1991
(51) Int. Cl.: G01M 3/04, G01M 3/18, G01M 3/16

(54) **Kabel zur Ortung von Flüssigkeiten**
Fluid localization cable
Câble de localisation de fluides

(30) Priorität: 21.12.1990 DE 4041169
(43) Veröffentlichungstag der Anmeldung: 01.07.1992
(73) Patentinhaber: Delphi Automotive Systems Deutschland GmbH, D-42369 Wuppertal (DE)
(72) Erfinder: Cvasa, Eduard, Dipl.-Ing., W-5600 Wuppertal 2 (DE)
(74) Vertreter: Priebisch, Rüdiger

(56) Entgegenhaltungen:
- EP-A- 0 245 753
- WO-A-90/10208
- ELECTRONICS LETTERS, Bd. 19, Nr. 23, November 1983, Stevenage, GB, Seiten 980-981, A.G.W.M. DE JONGH: "Simple Fibre-Optic Sensor for Detecting Water"

## Beschreibung

Die Erfindung betrifft ein Kabel zur Ortung von Flüssigkeiten, wie es im Prinzip durch die internationale Anmeldung WO 90/10208 vorbekannt ist.

Dort ist ausführlich auf die Verwendungsmöglichkeiten eines derartigen Kabels hingewiesen, desgleichen auf seine Wirkungsweise. Der Kern des dortigen Vorschlages besteht darin, über ein empfindliches Kernelement eine quellfähige Schicht und darüber ein Geflecht anzuordnen. Bei Quellung des Materials verkürzt sich das Geflecht bei entsprechender Größe des Flechtwinkels, und das empfindliche Kernelement knickt aus und bricht im Extremfall. Derartige Kabel haben sich bei Versuchsanordnungen gut bewährt. Es liegt jedoch das Bedürfnis nach einem Kabel vor, das die Anwesenheit von Flüssigkeit möglichst schnell feststellt, insbesondere in Fällen, bei denen nach Austreten von z. B. gefährlichen Flüssigkeiten mit einer hohen Umweltbelastung bzw. mit der Gefährdung von Menschen zu rechnen ist.

Der Erfindung liegt daher das Bestreben zugrunde, ein Kabel zu schaffen, das den vorgenannten Grundgedanken dahingehend weiterführt, daß das Kabel schnell auf die Anwesenheit von Flüssigkeit reagiert und somit ein schnelles Feststellen des Austritts von Flüssigkeiten ermöglicht.

Die Erfindung stellt dies dadurch sicher, daß mindestens ein Teil der einzelnen Geflechtsfäden eine äußere Quellschicht aufweist. Damit ist das Quellmittel nicht mehr unterhalb des Geflechts angeordnet, sondern bildet selbst einen Bestandteil des Geflechts. Da das Quellmittel nun schon an der Außenfläche des Kabels der Flüssigkeit ausgesetzt ist, kann die Flüssigkeit sofort auf das Quellmittel einwirken, ohne das Geflecht erst durchdringen zu müssen. Die der Flüssigkeit ausgesetzte Außenfläche des Quellmittels ist erheblich vergrößert. Beide Umstände führen dazu, daß die Quellung schneller erfolgt und somit das Kernelement schneller verformt wird.

Das Geflecht kann ein sogenanntes Mischgeflecht sein, das heißt aus Fäden mit und ohne Quellmittel bestehen. Vorzugsweise sind zur Optimierung der Quellung alle Geflechtsfäden mit Quellmittel umhüllt. Die Geflechtsfäden sind vorzugsweise aus Glas- oder Kunstseide, und als Quellmittel ist ein Polymer- oder Elastomer-Kunststoff gewählt, der vorzugsweise um die einzelnen Geflechtsfäden extrudiert ist. Dabei hat sich ein Silikon-Kautschuk bewährt. Das Kernelement ist mindestens ein auf Knickung oder dergleichen empfindlicher elektrischer oder optischer Leiter, insbesondere eine Lichtleitfaser aus Glas oder sprödem Kunststoff. Bevorzugte Ausbildungen des Kabels sind in den Ansprüchen 8 bis 10 aufgezeigt.

Das erfindungsgemäße Kabel spricht schon auf relativ kleine Mengen von Flüssigkeit an. Nach dem Stand der Technik wurde das Quellmittel z. B. bei Extrudierwärme auf das empfindliche Kernelement, z. B. Glasfaser, aufgebracht.

Die Erfindung vermeidet jegliche Wärmebelastung des Kernelements bei der Herstellung, da das Quellmittel auf die Geflechtsfäden, also getrennt vom Kernelement, aufgebracht wird. Schließlich hat sich gezeigt, daß durch den erfindungsgemäßen Aufbau der Durchmesser des Kabels insgesamt dünner ausgebildet werden kann; insbesondere ist bei dem erfindungsgemäßen Aufbau eine zusätzliche äußere Schutzhülle meist nicht erforderlich. Durch die sehr dünne Ausbildung sind Lagerhaltung und Verlegung sehr platzsparend durchzuführen.

In der Zeichnung ist ein Ausführungsbeispiel der Erfindung dargestellt, das im folgenden näher beschrieben wird.

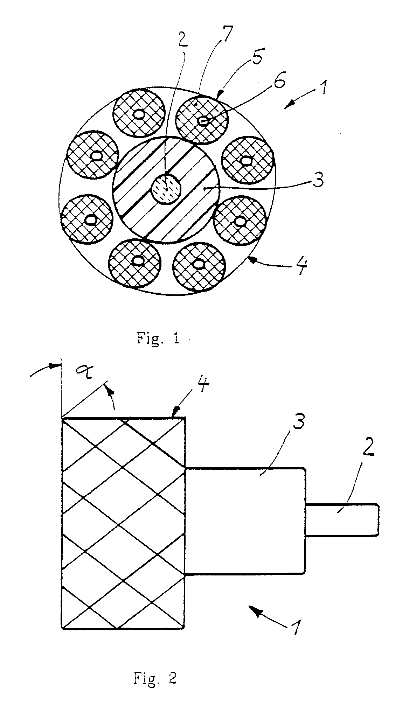

Figur 1 zeigt ein Kabel nach der Erfindung im Querschnitt.

Figur 2 zeigt ein Ende eines Kabels nach der Erfindung.

Das Kabel 1 setzt sich zusammen aus einem zentralen Lichtwellenleiter 2, der z. B. dem genormten Typ F-G 50/125 2,5 B 400 entsprechen kann. Es handelt sich dabei um eine sogenannte Gradientenfaser aus Glas mit folgendem Aufbau:

| | |
|---|---|
| Innendurchmesser: | 50/1.000 mm |
| Außendurchmesser: | 125/1.000 mm |
| max. Dämpfung: | 2,5 dB/km |
| Bandbreite: | 400 MHZ km |

Der Lichtwellenleiter 2 ist von einem extrudierten Mantel 3 aus Polyvinylchlorid umgeben, so daß sich ein Außendurchmesser von 0,9 mm ergibt.

Auf den Mantel 3 ist ein Geflecht 4 aus Geflechtsfäden 5 aufgebracht, die im Kern aus einem Glasseidenfaden 6 und außen aus einer Quellschicht 7 aus Silikonkautschuk bestehen. Der Durchmesser der Geflechtsfäden 5 beträgt 0,4 mm. Das Geflecht 4 aus den Geflechtsfäden 5 hat folgenden Aufbau:

| | |
|---|---|
| Fachung: | einfach |
| Spulen: | 8 |
| Bedeckung: | 94,1 % |
| Flechten: | 31,48 |
| Geflechtswinkel Alpha: | 52,3 Grad |

Die prinzipielle Wirkungsweise des Kabels 1 ist der schon genannten PCT-Veröffentlichung WO 90/10208 zu entnehmen, so daß auf eine Wiederholung der Beschreibung verzichtet wird.

## Patentansprüche

1. Kabel (1) zur Ortung von Flüssigkeiten, mit einem zentralen Kernelement (2,3), das empfindlich auf Verformung reagiert, mit einem um das Kernelement (2,3) angeordneten Geflecht (4), das durch Einwirkung einer Quellschichtanordnung (7) örtlich seine Länge ändert und dadurch das Kernelement (2,3) verformt, dadurch gekennzeichnet, daß die Quellschichtanordnung (7) dadurch gebildet ist, daß mindestens ein Teil der einzelnen Geflechtsfäden (5) jeweils eine äußere Quellschicht aufweist.

2. Kabel nach Anspruch 1, dadurch gekennzeichnet, daß alle Geflechtsfäden (5) eine äußere Quellschicht (7) aufweisen.

3. Kabel nach Anspruch 1 oder 2, dadurch gekennzeichnet, daß die Geflechtsfäden (5) im Kern aus Glas- oder Kunstseidefäden (6) bestehen.

4. Kabel nach einem der Ansprüche 1 bis 3, dadurch gekennzeichnet, daß die Quellschicht (7) aus einem Polymer- oder Elastomer-Kunststoff besteht.

5. Kabel nach Anspruch 3 oder 4, dadurch gekennzeichnet, daß die Quellschicht (7) um die einzelnen Geflechtsfäden (6) extrudiert ist.

6. Kabel nach Anspruch 4 oder 5, dadurch gekennzeichnet, daß die Quellschicht (7) aus Silikon-Kautschuk gebildet ist.

7. Kabel nach einem der Ansprüche 1 bis 6, dadurch gekennzeichnet, daß das Kernelement (2) aus mindestens einer Lichtleitfaser gebildet ist.

8. Kabel nach einem der Ansprüche 1 bis 7, gekennzeichnet durch folgenden Aufbau:
a) das Kernelement besteht aus einer Lichtleitfaser (2);
b) eine erste Schicht (3) sitzt fest auf dem Kernelement (2);
c) die erste Schicht (3) ist aus Polyvinylchlorid aufextrudiert;
d) das Geflecht (4) ist aus Glas- oder Kunstseidenfäden (6);
e) auf mindestens einen Teil der Glas- oder Kunstseidenfäden (6) ist eine Silikon-Kautschukschicht (7) aufextrudiert.

9. Kabel nach einem der Ansprüche 1 bis 8, dadurch gekennzeichnet, daß die Bedeckung des Geflechts (4) 80 bis 95 % beträgt.

10. Kabel nach einem der Ansprüche 1 bis 9, dadurch gekennzeichnet, daß der Flechtwinkel größer als 35 Grad, vorzugsweise 50 +/- 10 Grad beträgt.

## Claims

1. A cable (1) for locating the position of liquids, with a central core member (2,3) which is sensitive to deformation, and with braiding (4) arranged around the core member (2,3), the said braiding altering in length in localised regions under the influence of a swelling layer arrangement (7) and thus deforming the core member (2, 3), **characterised in that** at least some of the individual braiding threads (5) each have an outer swelling layer, thus forming the swelling layer arrangement (7).

2. A cable in accordance with claim 1, **characterised in that** all the braiding threads (5) have an outer swelling layer (7).

3. A cable in accordance with claim 1 or 2, **characterised in that** the core of the braiding threads (5) consists of glass fibres or artificial silk fibres (6).

4. A cable in accordance with one of claims 1 to 3, **characterised in that** the swelling layer (7) consists of a polymer plastic or an elastomer plastic.

5. A cable in accordance with claim 3 or 4, **characterised in that** the swelling layer (7) is extruded around the individual braiding threads (6).

6. A cable in accordance with claim 4 or 5, **characterised in that** the swelling layer (7) is formed from silicone rubber.

7. A cable in accordance with one of claims 1 to 6, **characterised in that** the core member (2) is formed from at least one optical fibre.

8. A cable in accordance with one of claims 1 to 7, **characterised by** the following structure:
a) the core member comprises an optical fibre (2);
b) a first layer (3) is securely positioned on the core member (2);
c) the first layer (3) is made of polyvinyl chloride and is extruded on;
d) the braiding (4) is made of glass fibres or artificial silk fibres (6);
e) a silicone rubber layer (7) is extruded on to at least a part of the glass fibres or artificial silk fibres (6).

9. A cable in accordance with one of claims 1 to 8, **characterised in that** the covering of the braiding (4) is 80 to 95%.

10. A cable in accordance with one of claims 1 to 9, **characterised in that** the angle of twist is more than 35 degrees, preferably 50 +/- 10 degrees.

## Revendications

1. Câble (1) destiné à la localisation de fluides, comportant un élément de noyau central (2,3), qui réagit de façon sensible à la déformation, avec une tresse (4) disposée autour de l'élément de noyau (2,3) qui sous l'effet d'un système de couches gonflantes (7) modifie localement sa longueur et déforme ainsi l'élément de noyau (2,3), caractérisé en ce que le système de couches gonflantes (7) est formé de telle manière qu'au moins une partie des différents fils de tresse (5) présente chaque fois une couche de gonflement extérieure.

2. Câble selon la revendication 1, caractérisé en ce que tous les fils de tresse (5) présentent une couche gonflante extérieure (7).

3. Câble selon la revendication 1 ou 2, caractérisé en ce que les fils de tresse (5) consistent dans le noyau en des fils de verre ou de soie synthétique (6).

4. Câble selon l'une des revendications 1 à 3, caractérisé en ce que la couche gonflante (7) est constituée de matière synthétique de polymère ou d'élastomère.

5. Câble selon la revendication 3 ou 4, caractérisé en ce que la couche gonflante (7) est extrudée autour de différents fils de tresse (6).

6. Câble selon la revendication 4 ou 5, caractérisé en ce que la couche gonflante (7) est formée de caoutchouc silicone.

7. Câble selon l'une des revendications 1 à 6, caractérisé en ce l'élément de noyau (2) est formé par au moins une fibre conductrice de lumière.

8. Câble selon l'une des revendications 1 à 7, caractérisé par la structure suivante:
a) l'élément de noyau consiste en une fibre conductrice de lumière (2);
b) une première couche (3) repose fermément sur l'élément de noyau (2);
c) la première couche (3) est extrudée à partir de chlorure de polyvinyle;
d) la tresse (4) est constituée de fils de verre ou de soie synthétique (6)
e) une couche de caoutchouc silicone (7) est extrudée sur au moins une partie des fils de verre ou de soie synthétique (6).

9. Câble selon l'une des revendications 1 à 8, caractérisé en ce que le revêtement de la tresse (4) est de 80 à 95%.

10. Câble selon l'une des revendications 1 à 9, caractérisé en ce que l'angle de torsion est supérieur à 35°, de préférence il est de 50 +/- 10 °.
